# EUROPÄISCHE PATENTANMELDUNG

(11) **EP 4 524 435 A1**
(43) Veröffentlichungstag der Anmeldung: **19.03.2025**
(21) Anmeldenummer: 24199230.4
(22) Anmeldetag: 09.09.2024
(51) Int. Cl.: F16K 5/04, F16K 5/18, F16K 27/06, F16K 39/06, F16K 5/02, F16K 5/16

(54) **ABGEDICHTETE ABSPERRARMATUR FÜR EINE FLUIDLEITUNG**

(30) Priorität: 12.09.2023 DE 102023124585
(71) Anmelder: Voss Automotive GmbH, 51688 Wipperfürth (DE)
(72) Erfinder: HAGEN, Harald, 51688 Wipperfürth (DE); BILSTEIN, Rozália, 51688 Wipperfürth (DE); ROSOWSKI, Evelin, 51688 Wipperfürth (DE); ROSENFELDT, Sascha, 51688 Wipperfürth (DE)
(74) Vertreter: Dr. Solf & Zapf Patent- und Rechtsanwalts PartG mbB

(57) **Zusammenfassung**

Die Erfindung betrifft eine Absperrarmatur (1) für eine Fluidleitung, mit einem bezüglich seiner Längsachse (Y-Y) hinsichtlich seiner Grundform rotationssymmetrischen Einsatzkörper (2), und mit einem Gehäuse (3), wobei der Einsatzkörper (2) abgedichtet zwischen einer Öffnungsstellung und einer Schließstellung um seine Längsachse (Y-Y) drehbar sowie lösbar in einer Aufnahme (7) des Gehäuses (3) befestigt ist, wobei auf dem Mantel (14) des Einsatzkörpers (2) mindestens eine Dichtung (15) angeordnet ist, die einen Spalt (16) zwischen dem Gehäuse (3) und dem Einsatzkörper (2) verschließt. Es wird vorgeschlagen, dass eine Weite dieses Spaltes (16) in bezüglich der Längsachse (Y-Y) des Einsatzkörpers (2) axialer und/oder umfangsgemäßer Richtung veränderlich eingestellt ist, und zwar durch die Gestaltung einer Innenumfangsfläche des Gehäuses (3) und/oder einer Außenumfangsfläche des Einsatzkörpers (2), wobei diese Fläche(n) - im Querschnitt in Richtung der Achse (Y-Y) der Aufnahme gesehen - jeweils zumindest bereichsweise von einer Kreisform abweicht bzw. abweichen.

## Beschreibung

Die Erfindung betrifft eine Absperrarmatur für eine Fluidleitung, mit einem bezüglich seiner Längsachse hinsichtlich seiner Grundform rotationssymmetrischen Einsatzkörper, und mit einem Gehäuse, welches in seiner Wandung eine Eintrittsöffnung und eine Austrittsöffnung für ein Fluid und eine Aufnahme für den Einsatzkörper aufweist, wobei die Aufnahme eine Einführöffnung für den Einsatzkörper und einen Boden aufweist, wobei der Einsatzkörper abgedichtet, zwischen einer Öffnungsstellung und einer Schließstellung um seine Längsachse drehbar sowie lösbar in der Aufnahme des Gehäuses befestigt ist, wobei in der Öffnungsstellung des Einsatzkörpers die Eintrittsöffnung und die Austrittsöffnung für das Fluid über einen Durchgangskanal des Einsatzkörpers miteinander in Verbindung stehen und in der Schließstellung des Einsatzkörpers durch jeweils einen Wandbereich des Einsatzkörpers verschlossen sind, wobei der Durchgangskanal des Einsatzkörpers jeweils eine zu der Eintrittsöffnung und zu der Austrittsöffnung des Gehäuses korrespondierende Kanaleintrittsöffnung sowie Kanalaustrittsöffnung für das Fluid aufweist, und wobei auf dem Mantel des Einsatzkörpers mindestens eine Dichtung angeordnet ist, die einen Spalt zwischen dem Gehäuse und dem Einsatzkörper verschließt.

Standardmäßig sind bei bekannten Armaturen dieser Art die Dichtungen, insbesondere elastomere Schnur- oder Ringdichtungen, immer gleichmäßig verpresst, weil üblicherweise sowohl der Innenraum des Gehäuses als auch der koaxial mit der Achse der Aufnahme angeordnete Einsatzkörper von der Grundgestalt her (hohl-)zylindrisch bzw. (hohl-)kegelförmig und daher - im axialen Schnitt gesehen - mit kreisrunder Kontur ausgebildet sind. So wird zwischen dem Außenumfang des Einsatzkörpers und dem Innenumfang des Gehäuses ein Ringspalt ausgebildet, dessen Spaltweite in axialer und in Umfangsrichtung im Wesentlichen konstant ist und gleichförmig verläuft, wobei die Dichtungen im unverpressten Zustand eine charakteristische Dickenabmessung aufweisen, die größer als die Spaltweite ist.

Im speziellen Fall kann es sich bei den bekannten Armaturen um solche handeln, die im Automobilbau, insbesondere in Kraftstoffleitungen, zum Einsatz kommen, wobei der Einsatzkörper und/oder das Gehäuse bevorzugt als Spritzgussteile aus Kunststoff hergestellt sind. Dadurch ist bei optimal geringem Masse-LeistungsVerhältnis eine kostengünstige Massenproduktion realisierbar.

Alle die vorgenannten, aus dem Stand der Technik bekannten Strukturmerkmale sind dabei grundsätzlich in der Lage, bei aufwandsarmer Fertigung eine hohe Funktionalität der bekannten Absperrarmatur zu gewährleisten.

Hervorzuheben ist dabei insbesondere die Lokalisierung der Dichtung auf dem Mantel des Einsatzkörpers, d. h. die Dichtung wird dazu nicht fest, beispielsweise nicht als Buchse oder Dichtungspatrone, und auch ohne zusätzliche Befestigungsmittel im Gehäuse montiert, sondern bewegt sich bei der Betätigung der Absperrarmatur mit dem Einsatzkörper, was eine optimal einfache Montage und auch Austauschbarkeit ermöglicht.

Allerdings besteht bei Armaturen dieser Art bei nur selten vorgenommen Betätigungsvorgängen die Gefahr, dass die standardmäßig immer verpressten Dichtungen mit der Gehäusewandung "verkleben". Auch das Auftreten viskoelastischer Fließvorgänge wird durch eine permanente Druckbeaufschlagung der Dichtung gefördert, so dass sich diese deformieren kann, worunter wiederum ihre Dichtungseffizienz leidet.

Es gibt Anwendungsfälle, bei denen die Armatur beispielsweise nur einmal oder zweimal im Jahr schließend betätigt wird und die ganze restliche Zeit für den Fluiddurchfluss geöffnet ist. Durch die beim Drehen des Einsatzkörpers auftretende Scherbelastung im Rahmen einer solchen, nur seltenen Betätigung der Armatur zum Schließen kann dann die Dichtung bei dem dabei notwendigerweise erfolgenden Ablösen von der Gehäusewandung beschädigt werden.

Grundsätzlich besteht, um dem entgegenzuwirken, die Möglichkeit, für die Dichtung Werkstoffe einzusetzen, die nur eine sehr geringe freie Oberflächenenergie aufweisen und die daher nicht zu dem unerwünschten Anhaften an der Gehäusewand neigen. In der Regel sind jedoch derartige Materialien kostenaufwändiger als die standardmäßig eingesetzten, was nachteiligerweise den Herstellungsaufwand für die Armatur vergrößert. Auch könnte diese technische Maßnahme das Problem nicht völlig beseitigen.

Es ist auch möglich, dass die Absperrarmatur zur Vermeidung eines Verklebens der Dichtung mit dem Gehäuse im Sinne einer Wartung in festgelegten kurzen Abständen vorsorglich kurzzeitig geschlossen und wieder geöffnet wird, auch dann, wenn dies funktional gar nicht notwendig ist. Dies würde aber nachteiligerweise den Wartungsaufwand vergrößern.

Eine oder zwei auf dem Mantel des Einsatzkörpers angeordnete Dichtung(en) wird/werden zudem beim Schalten der Absperrarmatur gleitend über die gehäuseseitige Eintrittsöffnung und ggf. auch über die gehäuseseitige Austrittsöffnung in der Wandung der Aufnahme hinwegbewegt und ist/sind somit im Falle einer häufigen Betätigung einem raschen Verschleiß ausgesetzt. Diesem Verschleißproblem kann zwar durch ein qualitativ hochwertiges Entgraten der Ränder der Eintritts- und Austrittsöffnung begegnet werden, jedoch gestaltet sich dieser Entgratungsprozess aufgrund der in den Bereichen von Eintritts- und Austrittsöffnung der Aufnahme vorliegenden Geometrie oft relativ umständlich und zeitaufwendig.

Der vorliegenden Erfindung liegt daher die Aufgabe zu Grunde, eine Absperrarmatur der eingangs genannten Art zu schaffen, die bei Vermeidung der vorstehend genannten Nachteile eine langzeitlich stabile Funktionalität und Dichtungswirkung gewährleistet.

Diese Aufgabe wird gemäß dem Kennzeichen des Anspruchs 1 dadurch gelöst, dass eine Weite des Spaltes zwischen dem Gehäuse und dem Einsatzkörper in bezüglich der Längsachse des Einsatzkörpers axialer und/oder umfangsgemäßer Richtung veränderlich eingestellt ist, und zwar durch die konstruktive geometrische Gestaltung einer Innenumfangsfläche des Gehäuses und/oder einer Außenumfangsfläche des Mantels des Einsatzkörpers, wobei diese Fläche(n) - im Querschnitt in Richtung der Achse der Aufnahme gesehen - jeweils zumindest bereichsweise von einer Kreisform abweicht bzw. abweichen.

Durch diese Variation der Spaltweite zwischen Gehäuse und Einsatzkörper kann erreicht werden, dass in der Öffnungsstellung des Einsatzkörpers eine Druckbeaufschlagung der Dichtung zumindest kleiner ist als in der Schließstellung des Einsatzkörpers und im Optimalfall die Dichtung sogar nahezu unverpresst im Dichtungsspalt gelagert, also freigestellt ist. Erst dann, wenn die Armatur geschlossen wird, beginnt eine insbesondere über den Verschließweg zunehmende Verpressung der Dichtung bis zum Erreichen der vollständigen Dichtstellung bei Vorliegen der Schließstellung des Einsatzkörpers.

Grundsätzlich können erfindungsgemäß auch mehrere Öffnungsstellungen des Einsatzkörpers verwirklicht sein. Dazu weist das Gehäuse mehrere Paare von Eintrittsöffnungen und zugeordneten Austrittsöffnungen in seiner Wandung auf, die über dem Umfang der Aufnahme des Gehäuses verteilt angeordnet sind. Vorzugsweise liegen sich die jeweilige Eintrittsöffnung und zugeordnete Austrittsöffnung eines Paares diametral gegenüber. Der Einsatzkörper verbindet in diesem Fall das jeweilige Paar in Abhängigkeit von seiner Drehstellung in einer der Öffnungsstellungen über seinen Durchgangskanal fluidisch miteinander. Insbesondere können auch mehrere Schließstellungen vorhanden sein, die jeweils zwischen den Öffnungsstellungen durch Wandabschnitte der Aufnahme gebildet werden.

Vorteilhaft ist dabei auch, dass der Drehwiderstand zur schließenden Betätigung der Absperrarmatur im Vergleich mit dem Stand der Technik - zumindest zu Beginn des Betätigungsvorganges - optimal klein ist.

Gemäß einer vorteilhaften Ausgestaltung der erfindungsgemäßen Absperrarmatur kann dabei insbesondere vorgesehen sein, dass die Aufnahme des Gehäuses jeweils in einem Teilbereich ihres Innenumfangs, in dem jeweils die Eintrittsöffnung und die Austrittsöffnung für das Fluid mündet, sowie in ein- oder beidseitig an diesen Bereich angrenzenden Teilbereichen der Wandung im Querschnitt - in Richtung der Achse der Aufnahme gesehen - eine kreisbogenförmige Kontur aufweist.

In zwischen den vorgenannten Bereichen liegenden Teilbereichen des Innenumfangs des Gehäuses kann die Aufnahme so ausgelegt werden, dass sich der Innendurchmesser des Gehäuses, und sich damit der Spalt zwischen Gehäuse und Einsatzkörper, in der beim Öffnen wirksam werdenden Drehrichtung des Einsatzkörpers erweitert.

Die Achse der Aufnahme des Gehäuses koinzidiert dabei im Montagezustand der erfindungsgemäßen Armatur mit der Längs- und Drehachse des Einsatzkörpers. Eine exzentrische Achsanordnung mit vergleichsweise aufwändigerer Lagerung des Einsatzkörpers im Gehäuse braucht erfindungsgemäß vorteilhafterweise nicht vorgesehen zu werden.

Der Erfindung liegt dabei der Gedanke zu Grunde, dass die vorstehend genannten Probleme des Standes der Technik nicht primär durch eine Auswahl der Dichtungsmaterialien oder durch zusätzliche Wartungsvorgänge der Armatur gelöst werden, wenngleich diese technischen Maßnahmen im Rahmen der Erfindung natürlich optional vorgesehen werden können, sondern durch die konstruktive geometrische Gestaltung von Gehäuse und/oder Einsatzkörper, insbesondere durch die konstruktive geometrische Gestaltung einer Innenumfangsfläche des Gehäuses und/oder einer Außenumfangsfläche des Einsatzkörpers.

Für die Dichtung können mit Vorteil herkömmliche Dichtungsringe oder andere, mit geringem technologischem Aufwand materialökonomisch günstig hergestellte Dichtungselemente eingesetzt werden, indem auf dem Mantel des Einsatzkörpers mindestens eine elastomere, als O-Ringdichtung in einer Vertiefung des Einsatzkörpers gehaltene Dichtung oder eine in einem Mehrkomponenten-Spritzgießverfahren angeformte Dichtung angeordnet ist.

Wenn herkömmliche Dichtringe eingesetzt werden, müssen allerdings die, insbesondere als Nuten ausgebildeten, Vertiefungen des Einsatzkörpers, zumindest bereichsweise, ausgeprägte Hinterschnitte aufweisen, damit die Dichtringe beim Drehen des Einsatzkörpers nicht aus den Vertiefungen springen können.

Insbesondere eröffnet das Mehrkomponenten-Spritzgießverfahren bezüglich der Dichtungen vorteilhafte Möglichkeiten, denn das Mehrkomponentenspritzgießen ist ein Fertigungsverfahren in der Kunststofftechnik, das dann eingesetzt werden kann, wenn Spritzgussteile aus zwei oder mehreren Kunststoffen bestehen sollen. Dabei lassen sich mit Vorteil auch völlig unterschiedliche Werkstoffe miteinander kombinieren. Der Begriff Mehrkomponentenspritzgießen umfasst im Detail verschiedene Verfahren, z. B. das Sandwichmolding-Verfahren und das Overmolding-Verfahren. Bei beiden werden jeweils mindestens zwei verschiedene Schmelzen miteinander kombiniert.

Während beim Sandwichmolding-Verfahren die beiden Schmelzen gleichzeitig gespritzt werden, bedeutet die deutsche Übersetzung von "Overmolding" etwa so viel wie "Überspritzen", denn hierbei erfolgt das Überspritzen eines aus einer ersten Schmelze zuvor gefertigten Spritzgussteils mit einer zweiten Schmelze während eines nachfolgenden Verfahrensschrittes. Abhängig von den ausgewählten Kunststoffen lassen sich mittels dieses Verfahrens insbesondere sogenannte Hart-Weich-Verbindungen herstellen. Diese bestehen in der Regel aus vergleichsweise harten Kunststoffen (hier: dem Einsatzkörper), die mit einer Schicht aus elastischem, vergleichsweise weichem Material, versehen werden (hier: der Dichtung). Die Maschinen zur Realisierung des Overmolding-Verfahrens sind mit mindestens zwei unabhängig voneinander steuerbaren Spritzaggregaten ausgestattet, die - wie auch die dazugehörige Steuerung - bereits für einen entsprechenden Anwendungsfall konstruiert sein können.

Für die Dichtung sind grundsätzlich verschiedene Werkstoffe, wie EPDM, FKM, NBR, HNBR, ACM, AEM, FFKM, Butylkautschuk, Silikonkautschuk, Fluorsilikonkautschuk, einsetzbar, wobei für das Mehrkomponenten-Spritzgießverfahren zur Realisierung des Overmolding-Verfahrens insbesondere thermoplastische Elastomere (TPE) einzusetzen sind.

Ein Fluorelastomer, wie es z. B. unter der Warenbezeichnung Viton bekannt ist (internationale Werkstoffabkürzung nach DIN-ISO Norm: FKM), ist kein TPE. Dieses Material ist zwar relativ hochpreisig, hält aber dafür - im Gegensatz zu vielen anderen Elastomeren - Kohlenwasserstoffen wie z. B. Ölen und Treibstoffen auch bei höheren Temperaturen stand, ohne aufzuquellen oder sich aufzulösen. Es zeichnet sich also als Dichtungsmaterial durch eine vergleichsweise vorteilhaft hohe thermische und chemische Beständigkeit aus. Auch ist seine Anhaftungsneigung - ähnlich wie dies von PTFE bekannt ist - vergleichsweise geringer als beispielsweise die beispielsweise einer NBR-Dichtung.

Ein Overmolding kann z. B. mit einem EPDM-basierenden TPE realisiert werden.

Auch kann nach der Fertigung des Einsatzkörpers auf diesen ein polymerer Dichtungs-Ausgangswerkstoff kalt aufgespritzt und dann vulkanisiert werden.

Vorzugsweise weist die erfindungsgemäß zur Verwendung kommende O-Ringdichtung oder die erfindungsgemäß in einem Mehrkomponenten-Spritzgießverfahren angeformte Dichtung eine von der Grundform her rechteckige oder zumindest elliptische Kontur auf, wobei sie auf dem Mantel des Einsatzkörpers zwei axiale, im Wesentlichen parallel zur Längsachse des Einsatzkörpers angeordnete Dichtspuren und zwei radiale, in der Projektion im Wesentlichen senkrecht zur Längsachse des Einsatzkörpers angeordnete Dichtspuren (Dichtungsabschnitte) ausbildet. Für bzw. in diese(n) Dichtspuren können mit Vorteil individuell weitere, gleichartige oder ungleichartige, technische Maßnahmen vorgesehen werden.

Im Rahmen der unterschiedlichen Gestaltung der Dichtspuren kann beispielsweise eine axiale Dichtspur, welche als eine erste axiale Dichtspur bezeichnet wird, aufgrund der geometrischen Ausgestaltung der Innenumfangsfläche des Gehäuses bei Vorliegen der Öffnungsstellung nicht mehr verpresst sein, weil dieser Teil der Dichtung im erweiterten Bereich der Innenkontur angeordnet ist.

Der andere Abschnitt der axialen Dichtspuren der Dichtung, der als zweite axiale Dichtspur bezeichnet wird, kann dabei noch in dem im Querschnitt kreisrund konturierten Bereich der Innenwandung des Gehäuses liegen, wobei aber auch hier bei Vorliegen der Öffnungsstellung eine Verpressung vermieden werden kann, und zwar dadurch, dass die zweite axiale Dichtspur bezüglich ihrer Lage im Gehäuse auf dem Mantel des Einsatzkörpers bei Vorliegen der Öffnungsstellung derart näher zur Mittenachse des Einsatzkörpers angeordnet ist, dass sie die Gehäusewandung nur drucklos berührt oder - wie die erste axiale Dichtspur - ebenfalls gänzlich freigestellt ist.

Insgesamt hat diese vorstehend beschriebene bevorzugte geometrische Ausgestaltung den Vorteil, dass die Dichtung im geöffneten Zustand der Absperrarmatur weitestgehend unverpresst ist. Erst dann, wenn die Armatur geschlossen wird, vergrößert sich die Verpressung der Dichtung entlang ihrer Dichtspuren immer mehr bis zu einem Maximum bei Erreichen der vollständigen Schließstellung.

Die erste Dichtspur wird dabei verpresst, indem sie aus dem erweiterten Bereich der Innenkontur des Gehäuses, wie über eine Rampe, in den kreisrunden Bereich der Innenkontur geführt wird.

Für die zweite Dichtspur kann mit Vorteil eine gesonderte Rampe gebildet sein, die auf eine Dichtfläche führt. Insbesondere im Zusammenhang damit kann in spezieller bevorzugter Ausbildung der Erfindung mit Vorteil vorgesehen sein, dass die Weite des Spaltes zwischen dem Gehäuse und dem Einsatzkörper auch in bezüglich der Längsachse des Einsatzkörpers axialer Richtung durch eine konstruktive geometrische Gestaltung von Gehäuse und/oder Einsatzkörper veränderlich eingestellt ist.

Um die Eintrittsöffnung und ggf. die Austrittsöffnung des Gehäuses herum sind die Dichtflächen, also die Weite des Spaltes zwischen dem Gehäuse und dem Einsatzkörper, durch die konstruktive geometrische Gestaltung der Innenumfangsfläche des Gehäuses und/oder der Außenumfangsfläche des Einsatzkörpers derart gestaltet, dass die jeweils die Öffnung(en) umlaufende Dichtung bei Vorliegen der Schließstellung überall gleichmäßig verpresst ist.

Der Einsatzkörper kann von seiner Grundgestalt her hohlzylindrisch oder hohlkegelförmig und insbesondere bezüglich seiner Längsachse im Wesentlichen zentralsymmetrisch ausgebildet sein, wobei zu bemerken ist, dass die erfindungsgemäße Absperrarmatur auch mit nur einer, zweckmäßigerweise auf der Seite des Fluideintritts angeordneten Dichtung, funktioniert. "Im Wesentlichen zentralsymmetrisch hinsichtlich der Grundgestalt" bedeutet dabei, dass der Einsatzkörper ggf. konstruktive Details aufweisen kann, die dieser Symmetrie nicht folgen.

Damit sich der Einsatzkörper nach einem Spritzvorgang nicht verzieht und dadurch z. B. unrund wird, ist es aber vorteilhaft, zwei einander diametral gegenüberliegende Dichtkonturen vorzusehen und den Einsatzkörper somit symmetrisch auszuführen. Besonders bevorzugt kann dann für den Gebrauch aber nur eine der Dichtkonturen mit einer Dichtung versehen werden.

Der Einsatzkörper und das Gehäuse können bei der Montage der erfindungsgemäßen Absperrarmatur mittels eines aus dem europäischen Patent EP 1 781 979 B1 an sich bekannten C-förmigen Verbindungselementes verbunden werden, wozu in diesem Fall am Einsatzkörper und am Gehäuse jeweils radial abragende, korrespondierende Flanschansätze vorzusehen sind, die im Montagezustand durch das C-förmige Verbindungselement geklammert werden.

Dabei können in diesen Flanschbereichen einander zugeordnete Anschläge vorgesehen sein, die die Drehbarkeit des Einsatzkörpers im Gehäuse auf einen Winkel begrenzen, vorzugsweise auf einen Winkel von 90°. Dadurch kann ein unerwünschtes Überfahren der Öffnungsstellung und der Schließstellung durch den Einsatzkörper vermieden werden, welches u. U. zu einer Beschädigung der Dichtung, insbesondere bei der vorbeschriebenen Ausführung, von deren erster axialen Dichtspur führen könnte.

Im oder am Gehäuse können jeweils an die Eintrittsöffnung und/oder an die Austrittsöffnung für das Fluid sich anschließende Verbindungselemente, wie Dorne, vorgesehen sein.

Weitere vorteilhafte Ausgestaltungen der Erfindung ergeben sich aus der folgenden Figurenbeschreibung und den abhängigen Ansprüchen.

Es zeigen:
- Fig. 1: ein bevorzugtes Ausführungsbeispiel einer erfindungsgemäßen Absperrarmatur in einer Schnittdarstellung gemäß der Linie I-I in Fig. 2,
- Fig. 2: das in Fig. 1 dargestellte bevorzugte Ausführungsbeispiel einer erfindungsgemäßen Absperrarmatur in der Draufsicht,
- Fig. 3: vergrößert, das in Fig. 1 und 2 dargestellte Ausführungsbeispiel einer erfindungsgemäßen Absperrarmatur in einer Schnittdarstellung gemäß der Linie D-D in Fig. 2,
- Fig. 4: eine perspektivische Explosionszeichnung von Einsatzkörper und halbgeschnittenem Gehäuse des in Fig. 1 und 2 dargestellten Ausführungsbeispiels einer erfindungsgemäßen Absperrarmatur, wobei das halbgeschnittene Gehäuse in zwei unterschiedlichen Positionen gezeigt ist,
- Fig. 5: das bevorzugte Ausführungsbeispiel einer erfindungsgemäßen Absperrarmatur in einer Schnittdarstellung gemäß der Linie H-H in Fig. 6,
- Fig. 6: das in den vorhergehenden Figuren dargestellte bevorzugte Ausführungsbeispiel einer erfindungsgemäßen Absperrarmatur in der Seitenansicht,
- Fig. 7: das bevorzugte Ausführungsbeispiel einer erfindungsgemäßen Absperrarmatur in einer Schnittdarstellung gemäß der Linie E-E in Fig. 6,
- Fig. 8: das bevorzugte Ausführungsbeispiel einer erfindungsgemäßen Absperrarmatur in einer Schnittdarstellung gemäß der Linie C-C in Fig. 6,
- Fig. 9 und 10: vergrößerte Ausschnitte aus Fig. 7 ohne die Dichtung,
- Fig. 11: einen besonders vergrößerten Ausschnitt aus Fig. 8, wobei die Dichtung ohne Schraffur, also so, als wäre sie unverpresst dargestellt ist,
- Fig. 12: eine Seitenansicht des Einsatzkörpers des bevorzugten Ausführungsbeispiels einer erfindungsgemäßen Absperrarmatur, wie er insbesondere als Vollkörper in der rechten Hälfte von Fig. 4 dargestellt ist,
- Fig. 13 bis 19: verschiedene Schnittdarstellungen des Einsatzkörpers des bevorzugten Ausführungsbeispiels einer erfindungsgemäßen Absperrarmatur gemäß den in Fig. 12 angegebenen Schnittebenen, in Fig. 16 bis 18 dabei vergrößert gegenüber Fig. 12,
- Fig. 20: verschiedene übliche Ansichten (perspektivisch, Draufsicht, Seitenansicht, Schnitte) einer ersten Ausführung einer Dichtung für eine erfindungsgemäße Absperrarmatur,
- Fig. 21: modellhaft, in perspektivischer Darstellung, eine zweite Ausführung einer, insbesondere im Mehrkomponenten-Spritzgießverfahren hergestellten Dichtung für eine erfindungsgemäße Absperrarmatur,
- Fig. 22 bis 24: verschiedene Ansichten eines Einsatzkörpers einer erfindungsgemäßen Absperrarmatur mit der in Fig. 21 dargestellten zweiten Dichtungsausführung.

In den verschiedenen Figuren der Zeichnung sind gleiche Teile stets mit denselben Bezugszeichen versehen und werden daher in der Regel - sofern nicht anders erforderlich - auch nur einmal beschrieben.

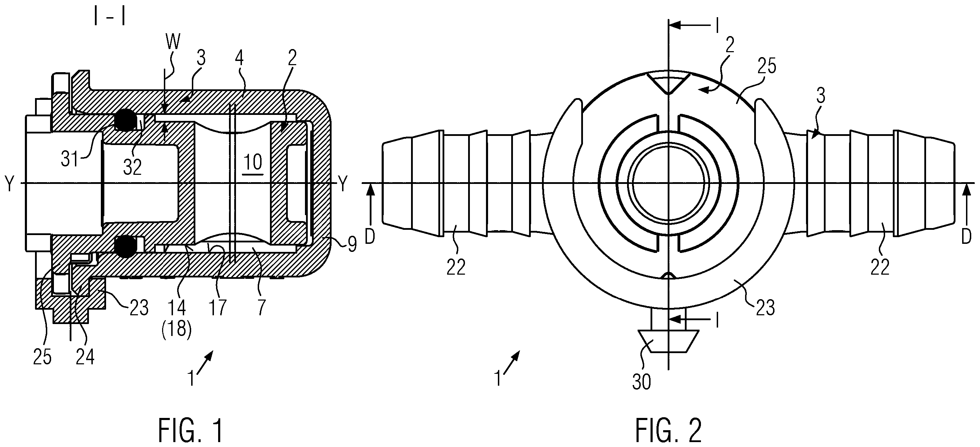

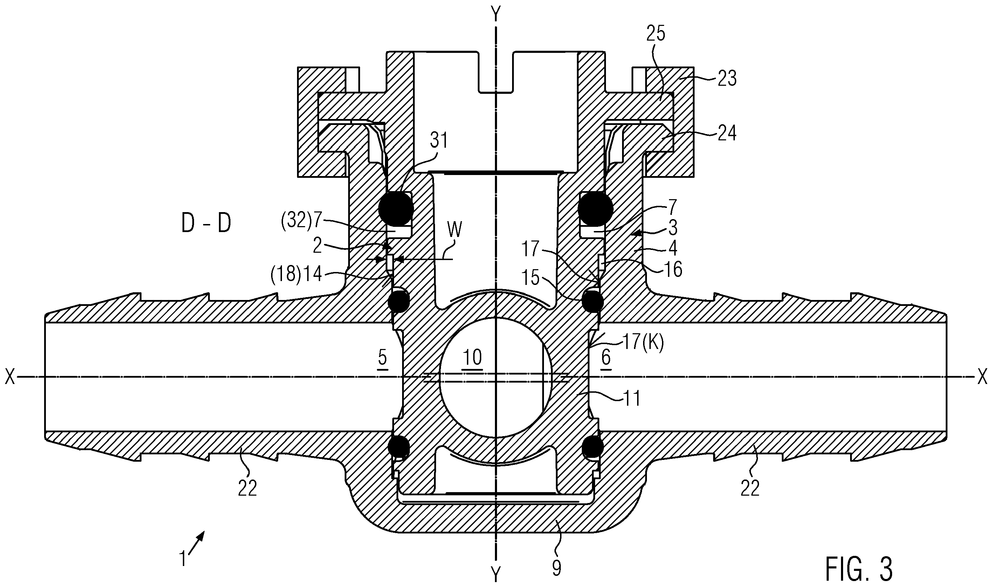

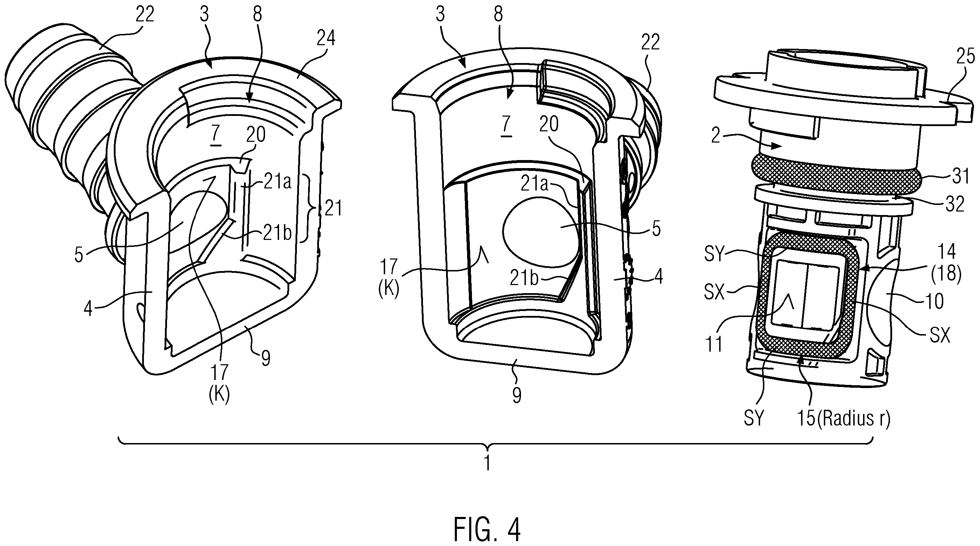

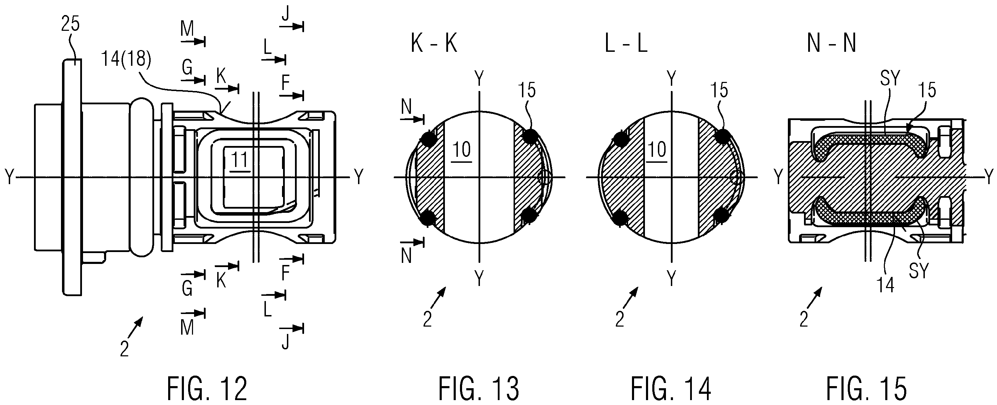

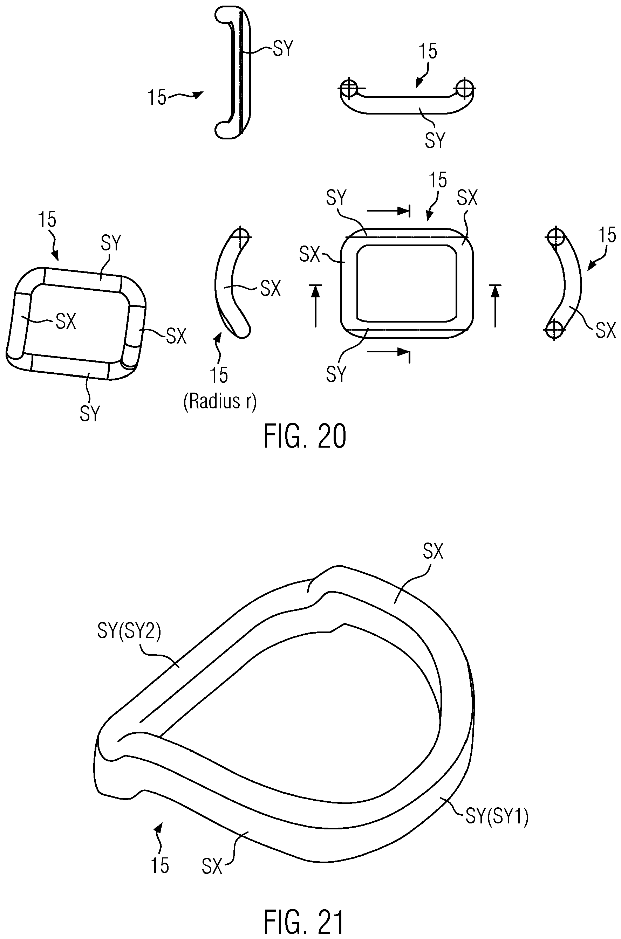

Die Figuren 1 bis 3 sowie 5 und 6 beziehen sich dabei auf die erfindungsgemäße Absperrarmatur als Ganzes, die Figuren 4 sowie 7 bis 11 auf die erfindungsgemäße Absperrarmatur ohne das Verbindungselement für Gehäuse und Einsatzkörper, die Figuren 12 bis 19 sowie 23 bis 24 auf den Einsatzkörper (mit oder ohne Dichtung) und die Figuren 20 und 21 auf die Dichtung in Alleinstellung.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

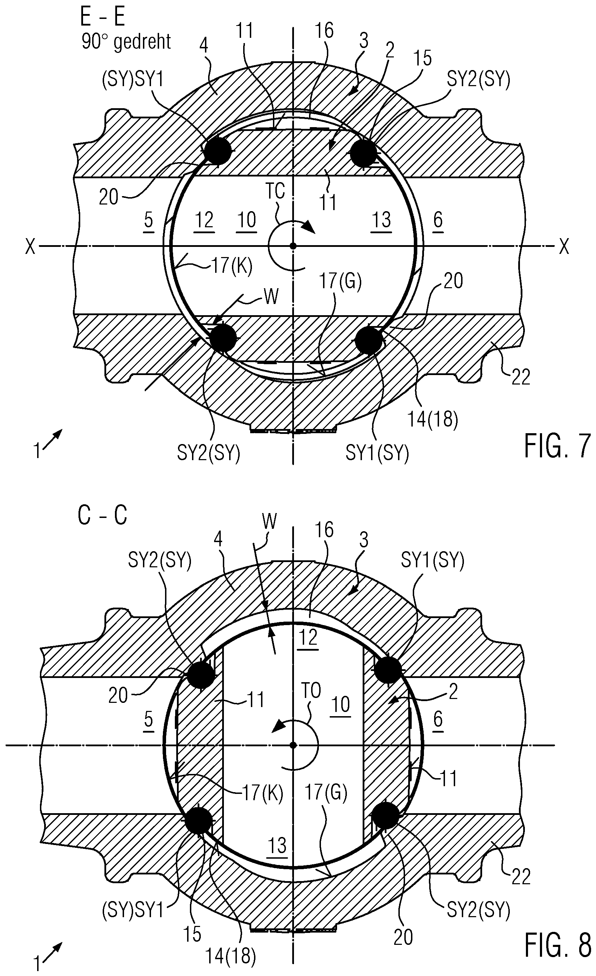

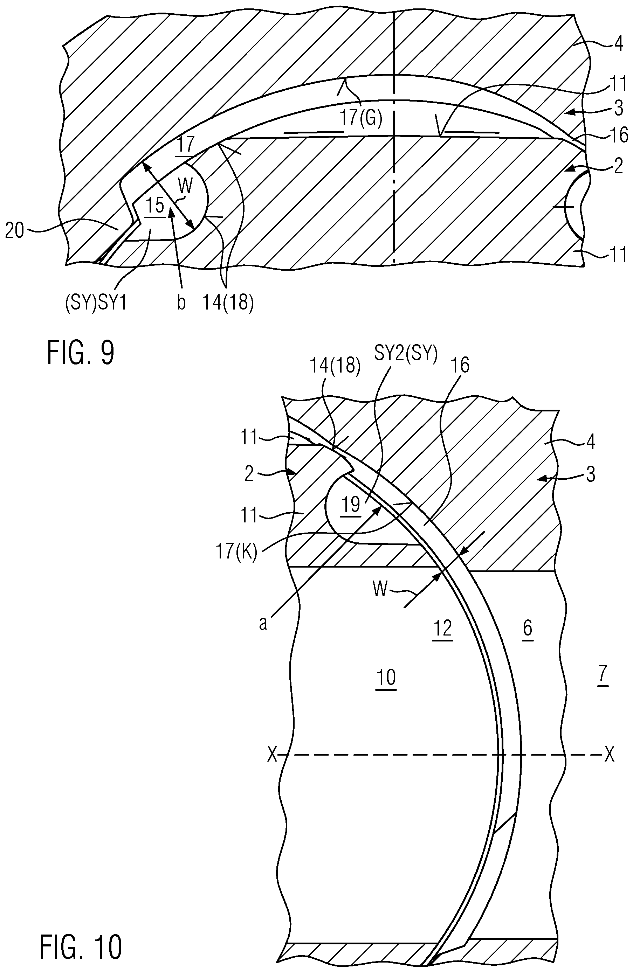

Die vorgenannten Figuren stellen exemplarisch eine erfindungsgemäße Absperrarmatur 1 für eine nicht dargestellte Fluidleitung dar, die einen bezüglich seiner Längsachse Y-Y hinsichtlich seiner Grundform rotationssymmetrischen Einsatzkörper 2 und ein Gehäuse 3 umfasst, welches in seiner Wandung 4 eine Eintrittsöffnung 5 und eine insbesondere auf einer Längsachse X-X des Gehäuses 3 diametral gegenüberliegende Austrittsöffnung 6 für ein Fluid und eine Aufnahme 7 für den Einsatzkörper 2 aufweist, wobei die Aufnahme 7 eine Einführöffnung 8 (siehe insbesondere Fig. 4) für den Einsatzkörper 2 und einen insbesondere geschlossenen Boden 9 aufweist, wobei der Einsatzkörper 2 abgedichtet zwischen einer Öffnungsstellung (siehe insbesondere Fig. 7 und 9) und einer Schließstellung (siehe insbesondere Fig. 1, 3, 8, 10 und 11) um seine Längsachse drehbar sowie lösbar in der Aufnahme 7 des Gehäuses 3 befestigt ist, wobei in der Öffnungsstellung des Einsatzkörpers 2 die Eintrittsöffnung 5 und die Austrittsöffnung 6 für das Fluid über einen Durchgangskanal 10 des Einsatzkörpers 2 miteinander in Verbindung stehen und in der Schließstellung des Einsatzkörpers 2 durch jeweils einen (geschlossenen) Wandbereich 11 des Einsatzkörpers 2 verschlossen sind, wobei der Durchgangskanal 10 des Einsatzkörpers 2 jeweils eine zu der Eintrittsöffnung 5 und zu der Austrittsöffnung 6 des Gehäuses 3 korrespondierende Kanaleintrittsöffnung 12 sowie Kanalaustrittsöffnung 13 (siehe insbesondere Fig. 7) für das Fluid aufweist, und wobei auf dem Mantel 14 des Einsatzkörpers 2 mindestens eine Dichtung 15 angeordnet ist, die einen Spalt 16 zwischen dem Gehäuse 3 und dem Einsatzkörper 2 verschließt.

Erfindungsgemäß ist vorgesehen, dass eine Weite W des Spaltes 16 zwischen dem Gehäuse 3 und dem Einsatzkörper 2 in bezüglich der Längsachse Y-Y des Einsatzkörpers 2 axialer und/oder umfangsgemäßer Richtung veränderlich eingestellt ist, und zwar durch die konstruktive geometrische Gestaltung einer Innenumfangsfläche 17 des Gehäuses 3 und/oder einer Außenumfangsfläche 18 des Einsatzkörpers 2, wobei diese Fläche(n) 17, 18 - im Querschnitt in Richtung der Achse Y-Y der Aufnahme 7 gesehen - jeweils zumindest bereichsweise von einer Kreisform abweicht bzw. abweichen.

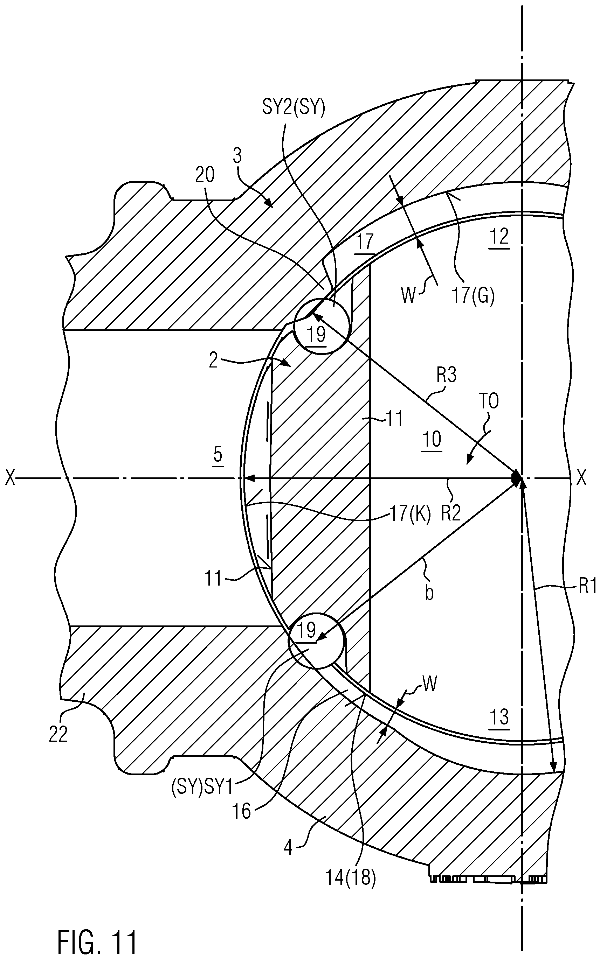

Dabei kann insbesondere vorgesehen sein, dass die Aufnahme 7 des Gehäuses 3 jeweils in einem Bereich, in den umfangsgemäß die Eintrittsöffnung 5 oder die Austrittsöffnung 6 für das Fluid mündet, sowie in ein- oder beidseitig an diesen Bereich angrenzenden Teilbereichen seiner Wandung 4 - im Querschnitt in Richtung der Achse der Aufnahme 7 gesehen - eine kreisbogenförmige Kontur K aufweist (siehe insbesondere Fig. 10 und 11).

In anderen dazwischenliegenden Teilbereichen seiner Wandung 4 kann die Aufnahme 7 des Gehäuses in - im Querschnitt in Richtung der Achse Y-Y der Aufnahme 7 gesehen - eine von der Kreisbogenform abweichende Kontur G aufweisen (siehe insbesondere Fig. 9 und 11).

Bevorzugt ist dabei eine geometrische Gestaltung, wonach ein Bereich G der Innenumfangsfläche 17 des Gehäuses 3, der - im Querschnitt in Richtung der Achse Y-Y der Aufnahme 7 gesehen - von einer Kreisbogenform abweicht, und ein Bereich K der Innenumfangsfläche 17 des Gehäuses, der - im Querschnitt in Richtung der Achse Y-Y der Aufnahme 7 gesehen - eine kreisbogenförmige Kontur aufweist, derart ineinander übergehen, dass sich der Innendurchmesser des Gehäuses 3 vergrößert und sich damit die Weite W des Spaltes 16 zwischen Gehäuse 3 und Einsatzkörper 2 in der beim Öffnen wirksam werdenden Drehrichtung TO des Einsatzkörpers 2 erweitert.

Die beim Schließen wirksam werdende Drehrichtung TC des Einsatzkörpers 2 und die beim Öffnen wirksam werdende Drehrichtung TO des Einsatzkörpers 2 sind insbesondere in den Figuren 7 und 8 sowie 11 durch entsprechende Pfeile angedeutet.

Der Einsatzkörper 2 ist bevorzugt von der Grundgestalt her hohlzylindrisch oder hohlkegelförmig und insbesondere bezüglich seiner Längsachse Y-Y im Wesentlichen zentralsymmetrisch ausgebildet.

Auf dem Mantel 14 des Einsatzkörpers 2 kann mindestens eine elastomere, als O-Ringdichtung in einer Vertiefung 19 im Mantel 14 des Einsatzkörpers 2 gehaltene Dichtung 15 oder eine in einem Mehrkomponenten-Spritzgießverfahren angeformte Dichtung 15 angeordnet sein. Die jeweilige Vorteilhaftigkeit der unterschiedlichen Dichtungsausführungen wurde bereits oben erläutert.

Hinsichtlich der Vertiefung 19 des Einsatzkörpers 2 ist zu beachten, dass diese auf die Weite W des Spaltes 16 zwischen Gehäuse 3 und Einsatzkörper 2 vergrößernd wirkt. Die Vertiefung 19 ist aus Gründen der Übersichtlichkeit nur in den Figuren 9 bis 11 sowie 16 und 17, also den zeichnerischen Darstellungen ohne die Dichtung 15, mit einem Bezugszeichen gekennzeichnet.

Hierbei ist zu ergänzen, dass bei einer in einem Mehrkomponenten-Spritzgießverfahren an den Einsatzkörper 2 angeformten Dichtung 15 die Größe der einer formschlüssigen Halterung dienenden Vertiefung 19 optimal klein gehalten oder ganz auf eine Vertiefung 19 verzichtet werden kann, weil die Dichtung 15 in diesem Fall eine adhäsive Verbindung mit dem Einsatzkörper 2 eingeht.

Wie bereits erwähnt, kann die Dichtung 15 mit Vorteil aus einem insbesondere thermoplastischen Elastomer, vorzugsweise aus einem Fluorelastomer, bestehen.

Wie insbesondere die Fig. 20 und 21, aber auch die Fig. 4, veranschaulichen, kann die Dichtung 15 eine von der Grundform her rechteckige oder zumindest elliptische Kontur aufweisen, wobei sie auf dem Mantel 14 des Einsatzkörpers 2 zwei axiale, im Wesentlichen parallel zur Längsachse Y-Y des Einsatzkörpers 2 angeordnete Dichtungsspuren SY und zwei radiale, in der Projektion im Wesentlichen senkrecht zur Längsachse Y-Y des Einsatzkörpers 2 angeordnete Dichtungsspuren SX ausbildet.

In Fig. 7 und 8 sind die beiden axialen, im Wesentlichen parallel zur Längsachse Y-Y des Einsatzkörpers 2 angeordneten Dichtungsspuren SY noch differenziert in eine erste axiale Dichtspur SY1, die bei Vorliegen der Öffnungsstellung in einem erweiterten Bereich der Innenkontur des Gehäuses 3 liegt, der dadurch gebildet ist, dass dort ein Bereich G der Innenumfangsfläche 17 des Gehäuses 3 - im Querschnitt in Richtung der Achse Y-Y der Aufnahme 7 gesehen - von einer Kreisbogenform abweicht, und in eine zweite axiale Dichtspur SY2, die bezüglich ihrer Lage im Gehäuse 3 auf dem Mantel 14 des Einsatzkörpers 2 in einem Bereich K liegt, der - im Querschnitt in Richtung der Achse Y-Y der Aufnahme 7 gesehen - eine kreisbogenförmige Kontur K aufweist.

Dabei ist jedoch vorgesehen, dass die zweite axiale Dichtspur SY2 - charakterisiert durch den Querschnittsmittelpunkt der Dichtung 15 - in einem Abstand a derart näher zur Mittenachse Y-Y des Einsatzkörpers 2 angeordnet ist als der Querschnittsmittelpunkt der ersten Dichtspur SY1 von der Mittenachse Y-Y des Einsatzkörpers 2, so dass die zweite axiale Dichtspur SY2, obwohl sie nicht in dem aufgeweiteten Bereich G liegt, ebenfalls die Gehäusewandung 4 nur drucklos berührt oder freigestellt ist. Dies wird insbesondere durch die vergrößerten Darstellungen in Fig. 9 und 10 (Fig. 9: Abstand b, Fig. 10: Abstand a) deutlich, die zwar nicht die Dichtungen 15, aber die Vertiefungen 19 zeigen, in denen die Dichtungen 15 angeordnet sind.

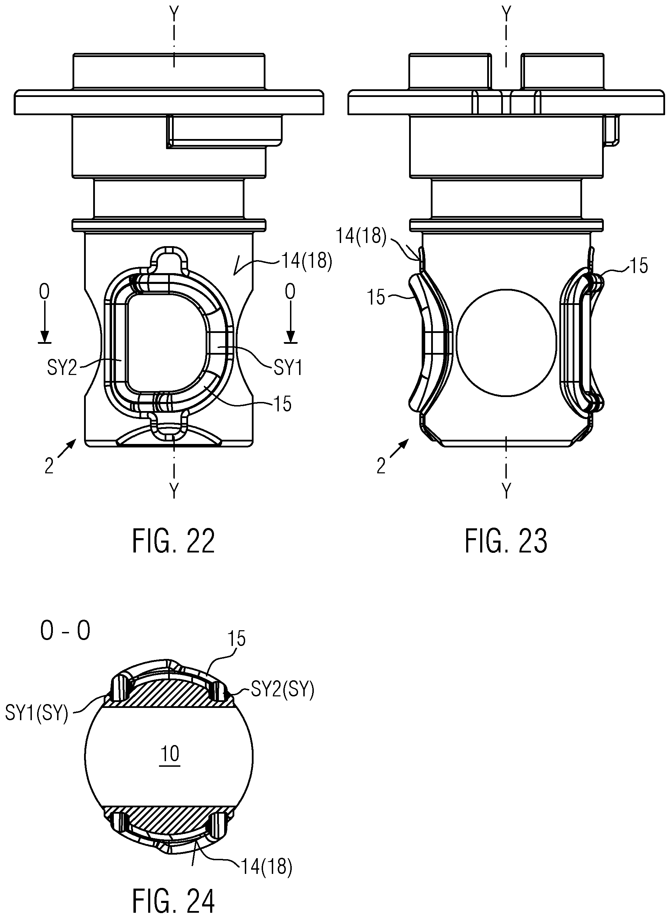

Dass die zweite axiale Dichtspur SY2 derart näher zur Mittenachse Y-Y des Einsatzkörpers 2 angeordnet ist (a < b), kann bevorzugt dadurch realisiert werden, dass sie auf einem kleineren Radius im Einsatzkörper 2 liegt als die erste axiale Dichtspur SY1, dass also die entsprechende Vertiefung 19 für die Dichtung 15 radial weiter in den Einsatzkörper 2 hineinreicht als die Vertiefung 19 der ersten axialen Dichtspur SY1, und/oder dadurch, dass der Dichtungsradius r in der zweiten axialen Dichtspur SY2 kleiner gewählt wird, wofür sich insbesondere die Anformung der Dichtung 15 an den Einsatzkörper 2 im Mehrkomponenten-Spritzgießverfahren anbietet, wie sie in den Fig. 22 bis 24 dargestellt ist.

Dies kann zu einem Zurückspringen der zweiten axialen Dichtspur SY2 führen, wie dies in Fig. 21 und auch in Fig. 24 - dort auf dem Mantel 14 des Einsatzkörpers 2 - gezeigt ist.

Die Differenz b - a kann dabei beispielsweise im Bereich von 0,3 mm bis 0,5 mm liegen. Insbesondere kann der Spalt 16 so ausgelegt werden, dass die Differenz b - a in allen Toleranzlagen 5 -15% unterhalb einer minimalen Verpressung der Dichtung 15 liegt.

Aus der Fig. 8 entsprechenden Darstellung in Fig. 11 wird zunächst deutlich, dass bei Vorliegen der Schließstellung die erste axiale Dichtspur SY1 auf dem kreisrund konturierten Bereich K der Innenkontur der Aufnahme 7 dichtet. Die zweite axiale Dichtspur SY2 dichtet in einem Bereich der Innenkontur der Aufnahme 7, in dem sich unmittelbar neben der Eintrittsöffnung 5 in der Wandung 4 ein radial nach innen ragender Vorsprung 20 befindet, der die Eintrittsöffnung 5 (bzw. anderseitig auch die Austrittsöffnung 6) von dem Bereich G der Wand 4 mit der von einem Kreisbogen abweichenden Kontur trennt. Im Bereich des radial nach innen ragenden Vorsprungs 20 kann die Innenumfangsfläche 17 des Gehäuses 3 bevorzugt kreisbogenförmig konturiert sein. Um die Öffnungen 5, 6 des Gehäuses 3 herum sind die Dichtflächen somit derart gestaltet, dass die umlaufenden Dichtungen 15 bei Vorliegen der Schließstellung überall annähernd gleichmäßig verpresst sind.

Des Weiteren veranschaulicht Fig. 11 auch zusammenfassend eine bevorzugte geometrische Gestaltung der Innenumfangsfläche 17 des Gehäuses 3 und der Außenumfangsfläche 18 des Einsatzkörpers 2 einschließlich der Dichtung 15. Diese lässt sich summarisch folgendermaßen darstellen:
- a = Abstand der zweiten axialen Dichtspur SY2 zur Mittelachse Y-Y des Ventilkörpers 2
- r = Radius der Dichtung 15
- b > a (wie vorstehend erläutert)
- R1 > b + r (Radius von 17 im Bereich von G, wobei R1 vom Anfangspunkt des sich erweiternden Bereiches G bis zu dessen Endpunkt stetig größer wird)
- R2 > a + r (Radius von 17 im Bereich von K)
- R2 < b + r
- R3 < a + r (R3 = Radius im Bereich von 20)

Insbesondere kann für eine Dichtung mit 1,5 mm Schnurstärke gelten:
R1 = 0,3 mm bis 0,5 mm + R2,
R2 = 0,3 mm bis 0,5 mm + R3.

Außer der umfangsgemäßen Variation in der Geometrie der erfindungsgemäßen Absperrarmatur 1 zur Variation der Spaltweite W kann in bevorzugter Ausführung auch vorgesehen sein, dass die Weite W des Spaltes 16 zwischen dem Gehäuse 3 und dem Einsatzkörper 2 in bezüglich der Längsachse Y-Y des Einsatzkörpers 2 axialer Richtung durch eine konstruktive geometrische Gestaltung von Gehäuse 3 und/oder Einsatzkörper 3 veränderlich eingestellt ist.

So kann - damit die zweite axiale Dichtspur SY2 bei der Überführung des Einsatzkörpers in die Schließstellung nicht sofort auf ganzer Länge auf den eine Rampe zur Dichtfläche bildenden Vorsprung 20 in der Wandung 4 des Gehäuses 3 trifft - im Gehäuse 3 an dem Vorsprung 20 eine Kontur mit einer, die zweite Dichtspur SY2 zur Dichtfläche führenden Übergangsfläche 21 vorgesehen werden, wie dies im linken Teil von Fig. 4 dargestellt ist. Diese Übergangsfläche kann aus einem parallel zur Achse Y-Y liegenden Teil 21a und einem schräg dazu liegenden, in Richtung auf den Boden hin konvergierenden Teil 21b bestehen. Dies führt vorteilhafterweise dazu, dass die zweite axiale Dichtspur SY2 den Vorsprung 20 zuerst nur unten, also in der Nähe des Bodens 9 in einem kleinen Bereich berührt, der dann zunehmend größer wird, bis kurz vor Erreichen der Schließstellung auch der anfänglich unverpresste Rest der zweiten axialen Dichtspur SY2 oben, also im Bereich der Einführöffnung 8 für den Einsatzkörper 2, in Kontakt mit dem parallel zur Achse Y-Y liegenden Teil 21a des Vorsprungs 20 kommt.

Bevorzugt ist die Dichtung 25 bis zum kompletten Überfahren der Eintrittsöffnung 5 und Austrittsöffnung 6 kontaktfrei, und kann somit durch eventuell vorhandene Grate oder scharfe Kanten an den Öffnungsrändern nicht beschädigt werden.

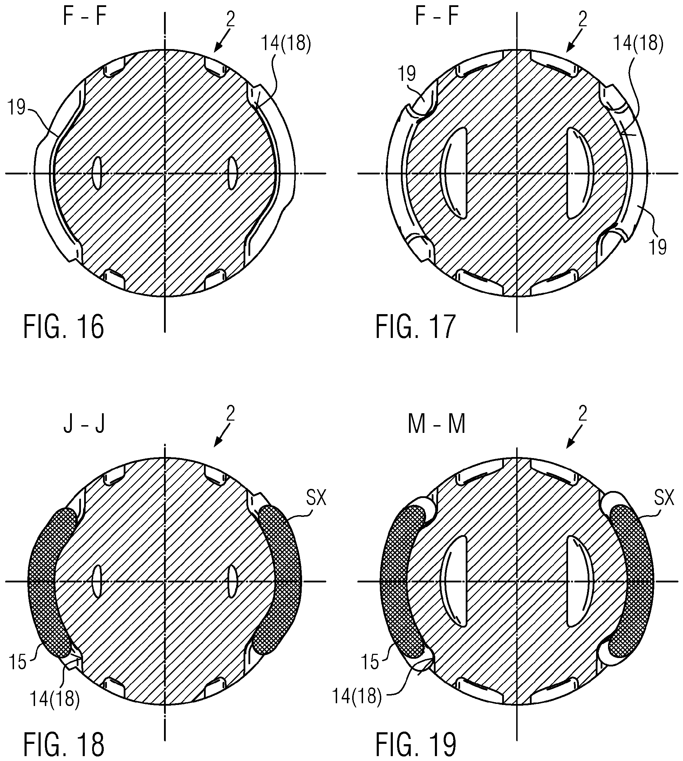

Die verschiedenen Schnittdarstellungen in den Figuren 13 bis 19, wobei die Schnitte F-F (Fig. 16) und J-J (Fig. 18) sowie die Schnitte G-G (Fig. 16) und M-M (Fig. 19) jeweils einmal ohne und einmal mit Dichtung 15 in derselben Ebene liegen, veranschaulichen, dass auch der Einsatzkörper 2 in seiner geometrischen Gestalt entlang seiner Längsachse Y-Y, beispielsweise bezüglich der Vertiefung 19 in seiner Außenumfangsfläche 18, unterschiedlich ausgebildet sein kann.

Zweckmäßigerweise sind im oder am Gehäuse 3 sich jeweils an die Eintrittsöffnung 5 und/oder an die Austrittsöffnung 6 für das Fluid anschließende Verbindungselemente 22, wie Dorne, vorgesehen.

Der Einsatzkörper 2 und das Gehäuse 3 können in bevorzugter Weise durch ein C-förmiges Verbindungselement 23 verbunden sein, wozu am Einsatzkörper 2 und am Gehäuse 3 jeweils radial abragende, korrespondierende Flanschansätze 24, 25 vorgesehen sind, die im Montagezustand durch das C-förmige Verbindungselement 23 geklammert werden.

Ein derartiges C-förmiges Verbindungselement 23 ist als Halteelement aus dem europäischen Patent EP 1 781 979 B1 im Zusammenhang mit einer Steckverbindung für Fluid-Leitungen bekannt. Dabei ist vorgesehen, dass die Steckverbindung eine Verriegelungseinrichtung mit zwei zusammensteckbaren Kupplungsteilen umfasst, die im zusammengesteckten Zustand über die Verriegelungseinrichtung lösbar arretierbar sind, wobei die Verriegelungseinrichtung einerseits aus zwei äußeren, radialen, flanschartigen und mit gleichem Durchmesser im gesteckten Zustand axial, in Steckrichtung benachbarten Haltestegen der beiden Kupplungsteile und andererseits aus dem Halteelement besteht, welches mit mindestens einem im Axialschnitt C-förmigen Halteabschnitt die axial benachbarten Haltestege der beiden Kupplungsteile formschlüssig axial und radial umgreift, wobei das Halteelement derart ausgebildet und an dem einen der beiden Kupplungsteile derart unverlierbar vormontiert ist, dass es einerseits axial und radial fixiert und andererseits im Bereich des/jedes Halteabschnittes radial elastisch beweglich ist, wobei das Halteelement im Bereich des/jedes Halteabschnittes sowie der Haltesteg des anderen Kupplungsteils in Anpassung aneinander zur Bildung einer in Steckrichtung formschlüssigen Rastverbindung ausgebildet sind.

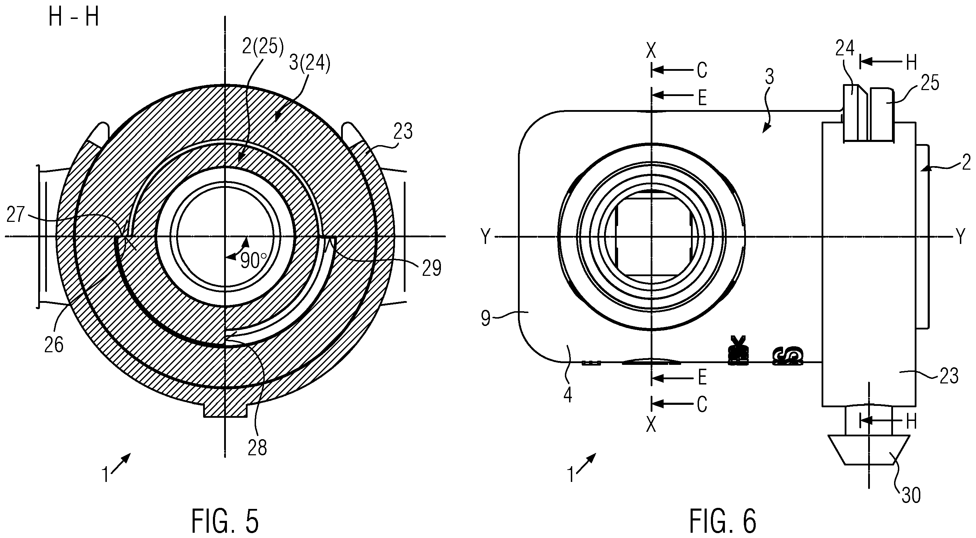

Zu weiteren möglichen Ausgestaltungen des Verbindungselementes 23 wird vollumfänglich auf das europäische Patent EP 1 781 979 B1 verwiesen. Z. B. zeigen die Fig. 2 und 6 ein dort beschriebenes, optional vorhandenes, der unverlierbaren Sicherung dienendes Knopfelement 30.

Wie insbesondere Fig. 5 veranschaulicht, können am Einsatzkörper 2 und am Gehäuse 3, insbesondere in Bereichen von deren Flanschansätzen 24, 25, jeweils einander zugeordnete Anschläge 26, 27 bzw. 28, 29 ausgebildet sein, die beim Öffnen und Schließen die Drehbarkeit des Einsatzkörpers 2 im Gehäuse 3 auf einen Winkel begrenzen, vorzugsweise auf einen Winkel von 90°.

Schließlich ist noch auszuführen, dass zweckmäßigerweise der Einsatzkörper 2 gegen das Gehäuse 3 in der Nähe von dessen Einführöffnung 8 mit einem den Einsatzkörper 2 vollständig umfangsgemäß umrundenden Dichtring 31 (oder durch eine entsprechende im Mehrkomponenten-Spritzgießverfahren angeformte Dichtung) abgedichtet sein kann. Dazu kann auf dem Einsatzkörper 2 eine Haltenut 32 vorgesehen sein.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Absperrarmatur
- 2: Einsatzkörper von 1
- 3: Gehäuse von 1
- 4: Wandung von 3
- 5: Eintrittsöffnung in 4
- 6: Austrittsöffnung in 4
- 7: Aufnahme in 3 für 2
- 8: Einführöffnung von 7 für 2
- 9: Boden von 7
- 10: Durchgangskanal von 2
- 11: geschlossener Wandbereich von 2
- 12: Kanaleintrittsöffnung von 10, korrespondierend zu 5
- 13: Kanalaustrittsöffnung von 10, korrespondierend zu 6
- 14: Mantel von 2
- 15: Dichtung
- 16: Spalt zwischen 2 und 3
- 17: Innenumfangsfläche von 3
- 18: Außenumfangsfläche von 2 (auf 14)
- 19: Vertiefung für 15 in 2
- 20: Vorsprung in 4 zwischen G und 5
- 21: Übergangsfläche in 17 für SY2
- 21a: oberer Teil von 21 (achsparallel zu Y-Y)
- 21b: unterer Teil von 21 (geneigt zu Y-Y)
- 22: Verbindungselement an 3 für Fluidleitung
- 23: Verbindungselement für 2 und 3
- 24: Flanschansatz von 3
- 25: Flanschansatz von 2
- 26: Anschlag von 3 für 27
- 27: Anschlag von 2 für 26
- 28: Anschlag von 2 für 29
- 29: Anschlag von 3 für 28
- 30: Knopfelement
- 31: Dichtring
- 32: Haltenut für 31 in 2

- a: Abstand von SY2 zu Y-Y
- b: Abstand von SY1 zu Y-Y
- G: von einem Kreisbogen abweichende Kontur von 4
- K: Kreisbogen-Kontur von 4
- R1: Radius von 17 im Bereich von G
- R2: Radius von 17 im Bereich von K
- R3: Radius von 17 im Bereich von 20
- r: Radius von 15
- TC: Schließ-Drehrichtung von 2
- TO: Öffnungs-Drehrichtung von 2
- W: Weite von 16
- X-X: Längsachse von 3
- Y-Y: Längsachse von 2 (Querachse zu X-X)

## Patentansprüche

1. Absperrarmatur (1) für eine Fluidleitung, mit einem bezüglich seiner Längsachse (Y-Y) hinsichtlich seiner Grundform rotationssymmetrischen Einsatzkörper (2), und mit einem Gehäuse (3), welches in seiner Wandung (4) eine Eintrittsöffnung (5) und eine Austrittsöffnung (6) für ein Fluid und eine Aufnahme (7) für den Einsatzkörper (2) aufweist, wobei die Aufnahme (7) eine Einführöffnung (8) für den Einsatzkörper (2) und einen Boden (9) aufweist, wobei der Einsatzkörper (2) abgedichtet, zwischen einer Öffnungsstellung und einer Schließstellung um seine Längsachse (Y-Y) drehbar sowie lösbar in der Aufnahme (7) des Gehäuses (3) befestigt ist, wobei in der Öffnungsstellung des Einsatzkörpers (2) die Eintrittsöffnung (5) und die Austrittsöffnung (6) für das Fluid über einen Durchgangskanal (10) des Einsatzkörpers (2) miteinander in Verbindung stehen und in der Schließstellung des Einsatzkörpers (2) durch jeweils einen Wandbereich (11) des Einsatzkörpers (2) verschlossen sind, wobei der Durchgangskanal (10) des Einsatzkörpers (2) jeweils eine zu der Eintrittsöffnung (5) und zu der Austrittsöffnung (6) des Gehäuses (3) korrespondierende Kanaleintrittsöffnung (12) sowie Kanalaustrittsöffnung (13) für das Fluid aufweist, und wobei auf dem Mantel (14) des Einsatzkörpers (2) mindestens eine Dichtung (15) angeordnet ist, die einen Spalt (16) zwischen dem Gehäuse (3) und dem Einsatzkörper (2) verschließt,
**dadurch gekennzeichnet, dass** eine Weite (W) des Spaltes (16) zwischen dem Gehäuse (3) und dem Einsatzkörper (2) in bezüglich der Längsachse (Y-Y) des Einsatzkörpers (2) axialer und/oder umfangsgemäßer Richtung veränderlich eingestellt ist, und zwar durch die konstruktive geometrische Gestaltung einer Innenumfangsfläche (17) des Gehäuses (3) und/oder einer Außenumfangsfläche (18) des Mantels (14) des Einsatzkörpers (2), wobei diese Fläche(n) (17, 18) - im Querschnitt in Richtung der Achse (Y-Y) der Aufnahme (7) gesehen - jeweils zumindest bereichsweise von einer Kreisform (K) abweicht bzw. abweichen.

2. Absperrarmatur (1) nach Anspruch 1,
**dadurch gekennzeichnet, dass** die Aufnahme (7) des Gehäuses (3) jeweils in einem Bereich, in dem umfangsgemäß die Eintrittsöffnung (5) oder die Austrittsöffnung (6) für das Fluid mündet, sowie in ein- oder beidseitig an diesen Bereich angrenzenden Teilbereichen seiner Wandung (4) - im Querschnitt in Richtung der Achse (Y-Y) der Aufnahme (7) gesehen - eine kreisbogenförmige Kontur (K) aufweist.

3. Absperrarmatur (1) nach Anspruch 1 oder 2,
**dadurch gekennzeichnet, dass** die Aufnahme (7) des Gehäuses (3) in Teilbereichen seiner Wandung (4) - im Querschnitt in Richtung der Achse (Y-Y) der Aufnahme (7) gesehen - eine von der Kreisbogenform abweichende Kontur (G) aufweist.

4. Absperrarmatur (1) nach Anspruch 2 und 3,
**dadurch gekennzeichnet, dass** ein Bereich (G) der Innenumfangsfläche (17) des Gehäuses (3), der - im Querschnitt in Richtung der Achse (Y-Y) der Aufnahme (7) gesehen - von einer Kreisbogenform abweicht, und ein Bereich (K) der Innenumfangsfläche (17) des Gehäuses (3), der - im Querschnitt in Richtung der Achse (Y-Y) der Aufnahme (7) gesehen - eine kreisbogenförmige Kontur aufweist, derart ineinander übergehen, dass sich der Innendurchmesser des Gehäuses (3) vergrößert und sich damit die Weite (W) des Spaltes (16) zwischen Gehäuse (3) und Einsatzkörper (2) in der beim Öffnen wirksam werdenden Drehrichtung (TO) des Einsatzkörpers (2) erweitert.

5. Absperrarmatur (1) nach einem der Ansprüche 1 bis 4,
**dadurch gekennzeichnet, dass** auf dem Mantel (14) des Einsatzkörpers (2) mindestens eine elastomere, als O-Ringdichtung in einer Vertiefung (19) des Einsatzkörpers gehaltene Dichtung (15) oder eine in einem Mehrkomponenten-Spritzgießverfahren angeformte Dichtung (15) angeordnet ist.

6. Absperrarmatur (1) nach einem der Ansprüche 1 bis 5,
**dadurch gekennzeichnet, dass** die Dichtung (15) aus EPDM, FKM, NBR, HNBR, ACM, AEM, FFKM, Butylkautschuk, Silikonkautschuk, Fluorsilikonkautschuk, insbesondere aus einem thermoplastischen Elastomer, vorzugsweise aus einem Fluorelastomer, besteht.

7. Absperrarmatur (1) nach einem der Ansprüche 1 bis 6,
**dadurch gekennzeichnet, dass** die Dichtung (15) eine von der Grundform her rechteckige oder zumindest elliptische Kontur aufweist, wobei sie auf dem Mantel (14) des Einsatzkörpers zwei axiale, im Wesentlichen parallel zur Längsachse (Y-Y) des Einsatzkörpers (2) angeordnete Dichtungsspuren (SY) und zwei radiale, in der Projektion im Wesentlichen senkrecht zur Längsachse (Y-Y) des Einsatzkörpers (2) angeordnete Dichtungsspuren (SX) ausbildet.

8. Absperrarmatur (1) nach Anspruch 7,
**dadurch gekennzeichnet, dass** eine erste axiale Dichtspur (SY, SY1) bei Vorliegen der Öffnungsstellung in einem erweiterten Bereich der Innenkontur des Gehäuses (3) liegt und eine zweite axiale Dichtspur (SY, SY2) bezüglich ihrer Lage im Gehäuse (3) auf dem Mantel des Einsatzkörpers (14) derart näher zur Mittenachse (Y-Y) des Einsatzkörpers (2) als die erste Dichtspur (SY1) angeordnet ist, dass sie die Gehäusewandung (4) nur drucklos berührt oder freigestellt ist.

9. Absperrarmatur (1) nach einem der Ansprüche 1 bis 8,
**dadurch gekennzeichnet, dass** die Weite (W) des Spaltes (16) zwischen dem Gehäuse (3) und dem Einsatzkörper (2) in bezüglich der Längsachse (Y-Y) des Einsatzkörpers (2) axialer Richtung durch eine konstruktive geometrische Gestaltung von Gehäuse (3) und/oder Einsatzkörper (2) veränderlich eingestellt ist.

10. Absperrarmatur (1) nach einem der Ansprüche 1 bis 9,
**dadurch gekennzeichnet, dass** der Einsatzkörper (2) von der Grundgestalt her hohlzylindrisch oder hohlkegelförmig und insbesondere bezüglich seiner Längsachse (Y-Y) im Wesentlichen zentralsymmetrisch ausgebildet ist.

11. Absperrarmatur (1) nach einem der Ansprüche 1 bis 10,
**dadurch gekennzeichnet, dass** im oder am Gehäuse (3) sich jeweils an die Eintrittsöffnung (5) und/oder an die Austrittsöffnung (6) für das Fluid anschließende Verbindungselemente (22), wie Dorne, vorgesehen sind.

12. Absperrarmatur (1) nach einem der Ansprüche 1 bis 11,
**dadurch gekennzeichnet, dass** der Einsatzkörper (2) und das Gehäuse (3) durch ein C-förmiges Verbindungselement (23) verbunden sind, wozu am Einsatzkörper (2) und am Gehäuse (3) jeweils radial abragende, korrespondierende Flanschansätze (24, 25) vorgesehen sind, die im Montagezustand durch das C-förmige Verbindungselement (23) geklammert werden.

13. Absperrarmatur (1) nach einem der Ansprüche 1 bis 12, insbesondere nach Anspruch 12,
**dadurch gekennzeichnet, dass** am Einsatzkörper (2) und am Gehäuse (3), insbesondere im Bereich der Flanschansätze (24, 25), einander zugeordnete Anschläge (26/27, 28/29) ausgebildet sind, die die Drehbarkeit des Einsatzkörpers (2) im Gehäuse (3) zwischen der Öffnungsstellung und der Schließstellung auf einen Winkel begrenzen, vorzugsweise auf einen Winkel von 90°.
